# EUROPEAN PATENT SPECIFICATION

(11) **EP 1 368 725 B1**
(45) Date of publication and mention of the grant of the patent: **04.09.2019**
(21) Application number: 02733800.3
(22) Date of filing: 12.02.2002
(51) Int. Cl.: G06F 13/38, G06F 15/173, H04B 7/00, H04L 12/40

(54) **METHODS AND APPARATUS FOR WIRELESS UPLOAD AND DOWNLOAD OF AIRCRAFT DATA**
VERFAHREN UND VORRICHTUNGEN ZUM DRAHTLOSEN HERAUF- UND HERUNTERLADEN VON FLUGZEUGDATEN
PROCEDES ET APPAREIL SANS FIL DE TELECHARGEMENT VERS L'AMONT ET DE TELECHARGEMENT VERS L'AVAL DE DONNEES DE VOL

(30) Priority: 13.02.2001 US 268085 P
(43) Date of publication of application: 10.12.2003
(73) Proprietor: The Boeing Company, Chicago, IL 60606-1596 (US)
(72) Inventor: BRINKLEY, Roger, R., Woodinville, WA 98072 (US); MITCHELL, Timothy, M., Seattle, WA 98116 (US); PRICE, Jerry, L., Sammamish, WA 98074 (US); LEE, David, R., Seattle, Washington 98124-2207 (US)
(74) Representative: Land, Addick Adrianus Gosling
(86) International application number: PCT/US2002/004125
(87) International publication number: WO 2002/079918

(56) References cited:
- WO-A1-00/07126
- US-A- 5 307 505
- US-A- 5 970 395
- US-A- 6 160 998
- US-B1- 6 173 159
- ANONYMOUS: "ARINC Protocol Tutorial Manual" [Online] 7 June 2000 (2000-06-07), Condor Engineering, Inc. , Santa Barbara , XP002542767 Retrieved from the Internet: URL:http://digilander.libero.it/LeoDaga/Co rsi/AD/Documenti/ARINCTutorial.pdf> * the whole document *
- 'Data communications for the air transport industry' CNS SYSTEMS INC. 07 February 1998, pages 1 - 3, XP002958123

## Description

The present disclosure relates to communications systems, and more particularly to methods and apparatus to facilitate loading and acquisition of data relating to aircraft loadable computers.

Digital computers on recent airplane models require frequent software updates. Flight management computers (FMCs) were among the first of these computers to have periodic updates performed. Originally, these updates were performed according to a tape loading standard (ARINC 603) that required the use of a portable device having one ARINC 429 output and two inputs. The loading was performed by attaching a cable and a portable tape loader to a 32-pin data loader connector located in the cockpit of the airplane.

The location of this connector was chosen in different model airplanes to avoid having a mechanic crawl around an electrical equipment (EE) bay each time he was required to perform a software update. Nevertheless, it was soon recognized that portable tape loaders were slow, large and cumbersome. Thus, a new data loading standard, ARINC 615-1, was developed to utilize standard 3 1/2"floppy disks.

To accommodate new ARINC 615-1 loaders, the 32-pin data loader connector was replaced with a new 53-pin connector. In addition, some airlines preferred that loaders be configured for permanent mounting on primary long haul aircraft. As a result, the ARINC 615 specification was upgraded to accommodate additional busses in an attempt to anticipate a maximum number of loadable units that would require an interface with an ARINC 615 loader. Today, as many as 24 loadable Line Replaceable Units (LRUs) may be found on a single aircraft. However, only eight LRUs can be accommodated by the ARINC 615-3 specification.

One solution to the increasing number of LRUs on an aircraft has been to provide a Portable Data Loader (PDL) connector with a multiple position rotary switch. In some cases, approximately 200 wires populate four circular connectors located on the data loader switch installed on a maintenance panel.

Data communication between aircraft and ground began using existing HF and VHF radios to transmit character data stored in a few avionics line replaceable units (LRUs). The routing of information such as central maintenance computer and aircraft condition monitoring system reports in one known data communication system is under control of a management unit (MU) based on ARINC 724 specifications. The interfaces through which data has been routed from aircraft systems are traditional analog discrete and ARINC 429 data bus interfaces.

As the complexity of aircraft communication and reporting systems (ACARS) have increased, production aircraft have been provisioned with more advanced versions of such systems based on ARINC 758 specifications. One such communication management unit (CMU) is capable of handling protocol layers beyond those specified by ARINC 724B. One known CMU is also intended to accommodate interfaces to Ethernet-based systems, adding an additional, non-traditional physical layer. Digital link radios currently in development would further improve transmission between ground stations and aircraft. However, bandwidth for this technology still lags that provided by broadband satellite data communications.

ARINC 758 CMU functionality manages the routing of data for aircraft avionics systems over data link radios and satellite communication systems (SATCOM), with expandability to Ethernet-compatible systems. Sources and end users for communication with a ground station include satellite data units (SDUs), ACMS, central maintenance computers (CMCs), and optional cabin terminals via HF, VHF, SATCOM, and new data link radios. Aircraft information to the CMU comes from many avionics sources, such as display systems, flight management computers (FMCs), DFDAU digital discretes, ACMS, DFDAU ARINC 753 data, out/off/on/in (0001) discretes and transponders. Two way communication is also established between multifunction control and display units (MCDUs), printers, data loaders, and aircraft programmable modules (APMs). CMUs are also capable of driving up to two sets of alert output discretes.

The aircraft industry is currently developing ARINC 763 Network Server Systems (NSS), which will have management capability for routing information over IEEE 802.11 transceivers utilizing wireless spread spectrum technology as well as Ethernet interface capability. The primary avionics data sources that ARINC 763 systems require are aircraft parametric information and 2-way ARINC 429 communication directly between avionics LRUs and a server interface unit (SIU).

As currently envisioned, ARINC 763 NSS will acquire parametric data and status via an ARINC 573/717 serial output of a digital flight data acquisition unit (DFDAU). To update software in avionics LRUs, the SIU is wired upstream from a rotary switch, between the switch and an existing portable data loader connector or an installed airborne data loader. However, one problem with designs of this type is that only raw parametric data out of the DFDAU is available. Processed reports, based on re-configurable capture criteria in ACMS, e. g., operator selectable channels of smart access recorder (SAR) data, re-programmable ACMS triggered reports, in addition to raw data intended for quick access recorders (QAR), are only available via an ARINC 6153 data loader interface to the ACMS, and can be retrieved on-ground via disk download, or via ACARS as a defined trigger-event occurs.

A primary goal of aircraft manufacturers is to minimize changes to aircraft production processes while at the same time offering increased functional capability and ease of use in new product offerings. When numerous new wiring, LRUs and supporting components are added to production aircraft, aircraft manufacturers incur large, non-recurring costs. To avoid drastic changes that would incur these large costs, ARINC 763 NSSs are being designed with a limited subset of traditional aircraft interfaces. For example, one known ARINC 763 NSS is being designed to tie into two primary interfaces. The first of these two interfaces is an ARINC 573/717 DFDAU serial output bus to an existing QAR interface or parallel ARINC 573/717 path. The second is an existing data loader interface. NSS designers thus minimize usage of aircraft information from different aircraft sources and add a new communication medium to the aircraft information routing scheme, namely, wireless IEEE 802. 11. Thus, some data movement issues on the aircraft side remain and some existing features, available in other known avionics LRUs, are not fully utilized.

Also, ARINC 758 and ARINC 763 systems have different philosophies regarding routing of aircraft information. ARINC 753 systems are connected to many existing aircraft interfaces with air/ground and limited ground/ground communication via existing radio and satellite technology. On the other hand, ARINC 763 systems are being designed for connection to a very small number of aircraft interfaces with ground to ground and limited air to ground communication (depending upon the distance to an access point) using wireless spread spectrum IEEE 802.11 communication technology. Known systems do not provide integration of these routing functions.

Present maintenance practices for downloading aircraft data into Avionics line replaceable units (LRUs) include using a portable or PC-based ARINC 615-3 data loader to download part number controlled databases, operational program configuration (OPC) files, and operational program software (OPS) that is ordinarily transferred using 3 1/4"floppy disks. A permanently mounted airborne data loader (or a bulk loader in a shop environment) can also be used to load aircraft LRUs.

Software loadable LRUs in at least one aircraft line can be downloaded with controlled information stored on floppy disks. The loadable data conforms to ARINC 615 data formatting standards by including a CONFIG. LDR header file, embedded load cyclic redundancy checks (CRCs), system address labels (SALs), and a data bus sequence, and conforms to other file structure requirements. Avionics systems currently installed in this aircraft line provide two-way communication using standard ARINC 615-3 protocol, and this protocol is used on all LRUs that require periodic software upgrades. Wiring to accommodate LRUs that use the ARINC 615-3 protocol is routed to an existing multi-deck rotary switch. In a typical Boeing 747-400, for example, up to 23 LRUs utilize this upload function. A human operator uses the rotary switch to provide connectivity between avionics units to an airborne data loader or to a connector of a portable data loader. The wiring to the switch passes from an electronics equipment (EE) bay to a centralized flight deck location.

Because of the need for manual intervention to operate switches to provide connectivity between avionics units, providing automatic uploads of avionics data from aircraft to ground stations via wireless communication links would require extensive rewiring of existing aircraft.

Remotely-initiated download of data from ground stations to aircraft would also require extensive rewiring.

US 6,173,159 B1 discloses a system and method that update flight management files and provide a retrievable record of the flight performance of an aircraft. A flight management computer is positioned on board the aircraft and interfaces and provides flight critical data received from flight navigation database files to a plurality of aircraft navigation and operational components located throughout the aircraft. A ground data link unit includes a data store that accumulates and stores flight performance data. A spread spectrum transceiver coupled to the data store transmits the stored flight performance data and uploads navigation database files over a spread spectrum communication signal. A controller is operatively connected to the data store, spread spectrum transceiver and flight management computer and receives the uploaded flight navigation database files and transfers the database files to a flight management computer. The airport based spread spectrum transceiver includes a receiver that receives the spread spectrum signal from the aircraft and demodulates the signal to obtain flight performance data. A transmitter transmits flight navigation database files to the aircraft over a second spread spectrum communication signal based on a unique tail number identifier.

One configuration of the present disclosure therefore provides a an apparatus for downloading data to a selected one of a plurality of avionics line replaceable units, "LRUs", onboard an aircraft, said apparatus comprising an aircraft data services link, "ADSL", including: a wireless radio transceiver, wherein data intended to be downloaded to an LRU is received wirelessly; a network server unit responsive to said wireless radio transceiver, wherein said network server unit is configured to identify an LRU to which a download is to be made using information contained in the data; and a remotely controllable switch responsive to said network server unit to configure a data path between said wireless radio transceiver and a selected one of said LRUs for downloading of data, wherein: said data is wirelessly downloaded to the identified LRU via the transceiver receiving the original data identifying the LRU using the selectively switched communication path, the ADSL being configured to perform a data download function that utilizes data loading capabilities of the aircraft LRUs, the network server unit comprises at least one processor and a memory, wherein the memory includes instructions to operate the processor, wherein the instructions comprise instructions to maintain a database containing version identifiers of software stored in software-loadable LRUs, and the processor is configured to update the database to reflect the updated software version in the identified LRU to which the data is downloaded.

In another configuration, the present disclosure provides a method for remotely downloading data to a selected one of a plurality of avionics line replaceable units on an aircraft, said method comprising: transmitting data wirelessly to a transceiver on the aircraft; identifying, by a network server unit, an LRU to which the data is to be downloaded using information contained in the data; selectively switching a communication path from said transceiver to the identified LRU dependent upon the identified LRU; and wirelessly downloading said data to the identified LRU utilizing the selectively switched communication path, wherein the network server unit comprises at least one processor and a memory, wherein the memory includes instructions to operate the processor, wherein the instructions comprise instructions to maintain a database containing version identifiers of software stored in software-loadable LRUs, the processor updating the database to reflect the updated software version in the identified LRU to which the data is downloaded.

Configurations of the present disclosure provide automatic loading and/or downloading of data from and/or to ground stations using a wireless communication link, without requiring extensive rewiring or redesign of existing aircraft.

Further areas of applicability of the present disclosure will become apparent from the detailed description provided hereinafter. It should be understood that the detailed description and specific examples, while indicating the preferred embodiment of the disclosure, are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
Figure 1 is a block diagram of one configuration of an aircraft avionics system of the present disclosure.
Figure 2 is block diagram of a configuration of the aircraft data services link (ADSL) shown Figure 1.
Figure 3 is a block diagram of one configuration of a hub or switch suitable for use in the aircraft data services link (ADSL) shown in Figure 2.

### DETAILED DESCRIPTION OF THE PREFERRED EMBODIMENTS

The following description of the preferred embodiment (s) is merely exemplary in nature and is in no way intended to limit the disclosure, its application, or uses.

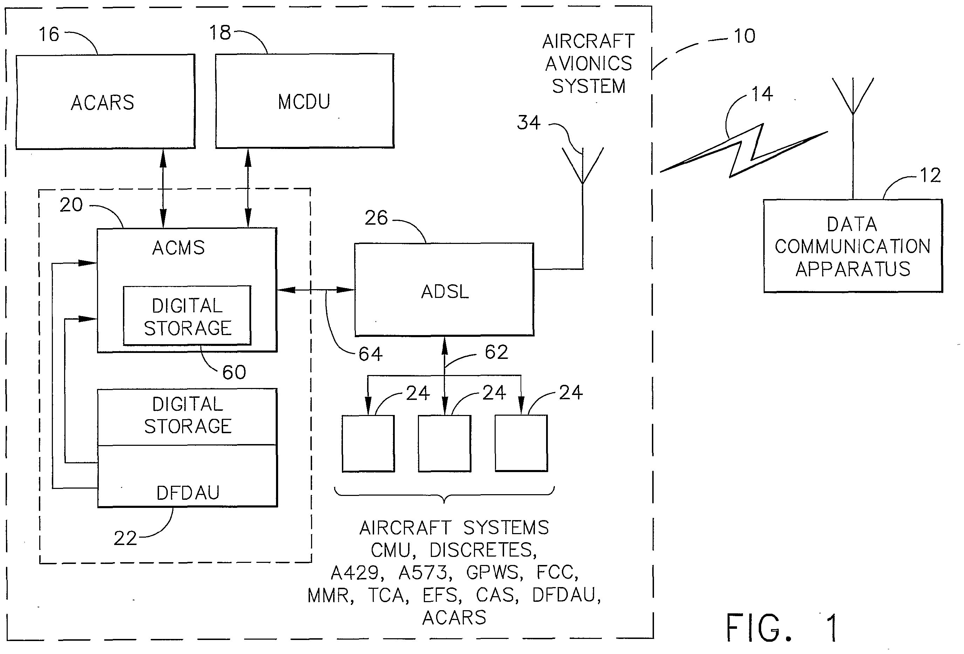

In one configuration of the present disclosure and referring to
Figure 1, an aircraft avionics system 10 on an aircraft supports communications between the aircraft and a data communication apparatus 12. This communication is provided via a wireless data link 14. A non-exhaustive list of suitable wireless data links include VHF radio links, HF radio links, satellite communication links (SATCOM), and wireless spread spectrum links such as IEEE 802.11. Suitable devices for data communication apparatus 12 include, but are not limited to, airport ground service terminals, wireless hand-held devices such as intranet-enabled cell-phones, pilot access terminals, electronic flight bags (EFBs), and so forth. Depending upon the range of wireless data link 14, data communication apparatus 12 can be external to and a significant distance from the aircraft on which avionics system 10 is installed. In at least one embodiment of the present disclosure, avionics system 10 is configured to communicate with more than one data communication apparatus 12, although not necessarily with more than one such apparatus 12 at one time. For example, communication with airport ground service terminals can be provided as well as communication with hand-held devices for maintenance.

Aircraft avionics system 10 further comprises a plurality of avionics units. In one configuration, these avionics units include an aircraft communication and reporting system (ACARS) 16, a multifunction control display unit (MCDU) 18, an aircraft condition monitoring system (ACMS) 20, and a digital flight data acquisition unit (DFDAU) 22. In one configuration, ACMS 20 and
DFDAU 22 comprise a single unit that provides both ACMS and DFDAU functions. In addition, a plurality of additional avionics LRUs (hereinafter avionics units) 24 are provided. These units 24 are collectively represented in Figure 1 as aircraft systems, communications management units (CMUs), discretes, ARINC 429 systems, and ARINC 573/717 systems. Routing of data to and from a ground-based data communication apparatus 12 to and from avionics units such as 16,18,20,22, and 24 is provided by an aircraft data services link (ADSL) 26 in the aircraft. For example, data transferred by ADSL 26 to and/or from data communication apparatus 12 includes, in one embodiment, software uploads and downloads, flight performance data, and applications for use by flight crew, cabin crew, maintenance crew, airport ground services and airline operations.

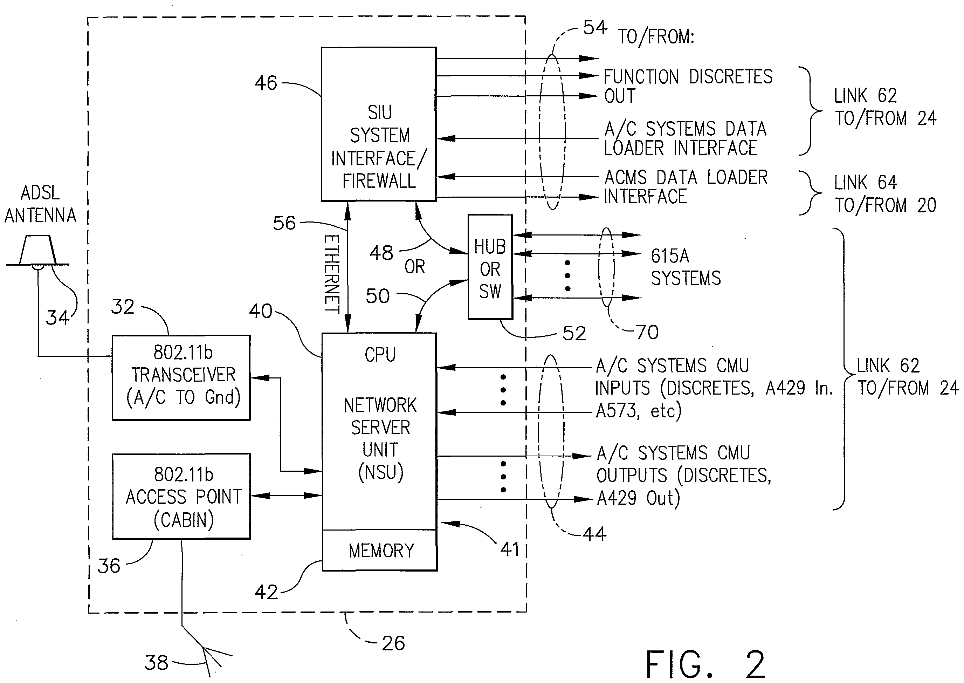

In one configuration and referring to Figure 2, ADSL 26 comprises one or more means 32,36 for wirelessly transmitting and receiving data to and from one or more data communication apparatus 12 (not shown in Figure 2). For example, an IEEE 802.11 transceiver 32 is coupled to an antenna 34 on the outside of the aircraft to provide communication between the aircraft and a data communication apparatus 12 on the ground. An additional IEEE 802.11 transceiver 36 is provided in one configuration with an antenna 38 inside the aircraft to provide access for portable data communication apparatus onboard the aircraft, such as those used by maintenance personnel. In one configuration not shown in Figure 2, the spread spectrum transmitter and receiver are separate components. In another configuration, transceiver 32 is any variety of IEEE 802.11 transceiver or separate transmitter and receiver, such as a separate IEEE 802.11a transmitter and receiver. In yet another configuration, transmitting and receiving means 32 is an amplitude modulation receiver and transmitter, or an amplitude modulation transceiver. (As used herein, IEEE 802.11 includes variations thereof, such as IEEE 802.11b).

Wireless transmitting and receiving means 32 is communicatively coupled to a network server unit (NSU) 41 that comprises at least one CPU or processor 40 and a memory 42. Additional wireless transmitting and receiving means 36, if present, are also coupled to NSU 41. In one configuration, memory 42 includes instructions to operate CPU 40. Include in these instructions in one configuration are instructions to maintain a database containing version identifiers of software stored in software-loadable avionics units (not shown in Figure 2). In one configuration, the operative coupling of NSU 41 to avionics units comprises "direct coupling" to one or more externally accessible busses 44, or indirect coupling 54 via a system interface unit/firewall (hereinafter, SIU) 46. SIU 46 sends and receives data to and from NSU 41 in one configuration via an Ethernet connection 56. It will be understood that the "direct coupling" to busses 44 may include timing and level interface circuitry, as required. This circuitry is not shown in Figure 2. However, the design of such circuitry is considered to be within the capability of one of ordinary skill in the art.

ADSL 26 further comprises a remotely controllable switch 52, sometimes also referred to as a "hub". Switch 52 sends and receives data to and from NSU 41 either directly 50, or in another configuration, via a bus or other data connection 48 to SIU 46. Switch 52 is coupled to a plurality of avionics units, represented collectively in Figure 1 as 24. For example, switch 52 is coupled to a plurality of software-loadable ARINC 615 or 615A units. Such units have, in the past, been loaded utilizing a manually-switched connector in an avionics bay of an aircraft, because the ARINC 429 (or A429) standard does not allow more than one such unit to share a single bus. The use of a remotely controllable switch 52 permits communication between a data communication apparatus 12 and a selectively coupled avionics unit out of a plurality of such units using A429 busses (via antenna 34 or 38, and NSU 41) without shorting of A429 busses from different avionics units.

In one configuration, switch 52 is remotely controlled by NSU 41 either directly 50 or via bus or data connection 48. When data is downloaded for a selected avionics unit from a ground-based data communication apparatus 12, NSU 41 identifies the intended destination avionics unit. For example, instructions stored in memory 42 instruct NSU 41 processor 40 to buffer downloaded ARINC 615 or 615A compliant data in memory 42 and to identify the intended destination avionics source unit from information contained in the standard format of the data. Processor 40 then electronically switches hub or switch 52 (for example, by a signal sent via data connection 48 or 50 and recognized by hub or switch 52) to provide a communication path from ADSL 26 to the proper avionics unit for downloading the buffered data via the communication path to the proper avionics unit. Thus, processor 40 is responsive to data received from data communications apparatus 12 via wireless transmitting and receiving means 32 to selectively couple avionics units to ADSL 26 to provide communication between a selectively coupled avionics unit and data communication apparatus 12 via ADSL 26.

In addition, processor 40 updates its database to reflect the updated software version in that avionics unit. In configurations in which the selected avionics unit is able to report fault information pertaining to the uploaded data, this fault data is communicated back to ADSL 26 over the electronically switched communication path and wirelessly communicated via ADSL 26 back to the data communication apparatus 12 that transmitted the update. Also in one configuration, fault information is incorporated into the database stored in memory 42.

Thus, in one configuration of the present disclosure, a communication path such as an ARINC 429 bus is switched to provide communication continuity between an avionics unit (such as one of the units indicated collectively at 24) and ADSL 26. Data is communicated electronically from the avionics unit to ADSL 26 via this electronically switched communication path, and then this data is wirelessly communicated 14 from ADSL 26 to data communication apparatus 12. Remotely controllable switch 52 in one configuration is coupled to at least two avionics units via ARINC 429 (A429) busses, and selects one of the avionics units at a time for coupling to processor 40.

Also in one configuration of the present disclosure, aircraft performance data is transmitted to a ground-based data communication apparatus 12 by aircraft avionics system 10. Referring again to Figures 1 and 2, aircraft performance data is gathered by ACMS 20 from avionics unit sources. In one configuration, the avionics unit sources include at least one of an ACARS 16, an MCDU 18 or a DFDAU 22, or combinations thereof. This performance data is communicated from ACMS 20 to ADSL 26 electronically via communication link 64, and wirelessly 14 from ADSL 26 to data communication apparatus 12.

NSU 41 processor 40 of ADSL 26 is responsive to data transferred to it by ACMS 20 and, in one configuration, is configured to schedule wireless transmission 14 of the transferred data from ACMS 20 to data communication apparatus 12. For example, a program in memory 42 executed by NSU 41 processor 40 wirelessly transmits 14 this data at scheduled times during a flight, or upon landing.

In one configuration, data carried over wireless link 14 includes configuration updates to communication management units (CMUs) 24 downloaded from a ground station to memory 42 in ADSL 26. For example, one type of update is provided as an operational control configuration (OPC) software loadable 'controlled' part. Configuration management is provided by a database in the memory of ADSL 26 and at an originating ground network node (i.e., data communications apparatus 12) and are synchronized, coordinated and tracked on both the aircraft and at the ground. Real-time NSU 41 processor 40 handles data acquisition and communication between aircraft interfaces and server/router.

Databases and datasets for ADSL 26 functionality are treated as configuration updates in similar form and part number control as CMU OPC updates. Examples of such databases and datasets include navigation databases, weather maps, synthetic vision profile maps and runway maps to assist in surface awareness and/or guidance.

Operational program software (OPS) updates by ADSL 26 are handled under strict configuration control guidelines in one configuration of the present disclosure. Acceptance by ADSL 26 of ground station data OPS downloads via data communication apparatus 12 and storage in NSU 41 memory 42 are conditioned upon passing a number of predetermined tests, such as compatibility checks, revision history checks, and/or synchronization with a version control system at an authenticated source on the ground. In one configuration, an aircraft configuration management application in ADSL 26 is configured to perform automatic OPS downloads when required by hardware replacement, and to flag any unresolved aircraft/software compatibility issues.

In one configuration, some types of information from the avionics units are stored and time-tagged for later retrieval and transfer to a network client such as a pilot access terminal, an electronic flight bag (EFB), or ground network system (not shown in the figures). Real-time parametric data is collected from the avionics systems, including (but not limited solely to) data collected from an ARINC 573/717 output of DFDAU 22. This data is stored in a variable recording buffer (shown as digital storage 60 in Figure 1) to attach trigger events to the function of ACARS 16. In one configuration, the window size of buffer 60 is reprogrammable via an OPC update.

In one configuration, ADSL 26 includes an avionics data acquisition function using existing ARINC 615-3 handshaking protocols.

Although these protocols are used today to upload software to LRUs, physical connections and software in avionics LRUs that support an upload of fault data already exist. ADSL 26 is also used, in one configuration, to collect avionics LRU configuration information through an avionics gateway and to identify and store in memory the current software part numbers installed on an aircraft. A predefined format is used for each LRU to transmit its software part number to the ADSL 26.

In one configuration, there are six major communication paths for transfer of data.

### 1. Aircraft to ADSL.

Aircraft to ADSL 26 interfaces 62, 64 communicate upload fault information and configuration information for all connected ARINC 615-3 loadable systems. In one configuration, this information is also provided from ARINC 615A (Ethernet) loadable systems. (Hereinafter, both in the description and in the claims, reference to an ARINC 615 system is intended to encompass all ARINC 615 systems, irrespective of suffix, unless otherwise noted.) Examples of such systems are MCDUs and cabin terminal interfaces. This data is provided, in one configuration, via ARINC 429. In addition, data is provided from CMU interfaces via ARINC 429, discretes, and ARINC 573/717 serial outputs.

### 2. ADSL to aircraft.

Bidirectional interface 62,64 provides a dataload interface for all ARINC 615 upload software to all connected systems via ARINC 429, including, in one configuration, ARINC 615A (Ethernet). Examples of such systems are MCDU 18 and cabin terminal interfaces. This data is provided, in one configuration, via ARINC 429. In addition, data is provided from CMU interfaces via ARINC 429, discretes.

### 3. ADSL to clients.

Interface 62, 64 provides fault information and software configuration information from an ARINC 615 download application for use by client-resident applications using IEEE 802.11 protocol. Examples of such systems are enhanced MCDU 18, cabin terminal functionality, software updates to be used by clients, i.e., flight crew, cabin crew, maintenance, airport ground services and airline operations. Real time data captured by ADSL 26 and outputs of "auto-report generation" applications on ADSL 26 are available for display using client resident applications.

### 4. Client to ADSL.

Outputs of reports generated by resident applications on client devices, such as pilot access terminals (PATs), electronic flight bag (EFB), etc. (not shown in the figures) are communicated via IEEE 802.11. Clients can emulate MCDU 18, cabin terminal interface for communications. Outputs of applications in client devices, such as pilot access terminals (PATs), electronic flight bag (EFB), etc., via IEEE 802.11.

### 5. ADSL to ground

Stored data, reports transmitted automatically to or requested from a ground station via a communication link 14 (for example, HF, VHF, SATCOM, broadband, or IEEE 802.11).

### 6. Ground to ADSL

This data comprises software updates for avionics, configuration management synchronization information, selective fault report and configuration data requests. (Databases and configuration updates are considered as software updates for purposes of this description.) ADSL 26 interfaces with the aircraft via the SIU 46 and via a communications router/server 44,54,70. SIU 46 provides an upload path for software and updates and a download path for avionics LRU stored information.

The avionics LRU stored information can include, but is not limited to, avionics LRU fault information and recorded parametric data and triggered reports.

The communications router/server provides end-to-end connection from the aircraft/ground network client to any other aircraft/ground network client in a user-defined infrastructure. For example connection is provided to the flight crew using pilot access terminals or EFBs, to the cabin crew using cabin terminals or EFBs, to the maintenance crew using EFBs, PATs or any of a variety of wireless hand-held devices such as intranet web-connected cell phones, etc., to airport ground services via ground-based terminals and wireless hand-held devices, and to airline operations via ground-based terminals.

Connectivity media include ARINC 429, Ethernet, HF radio, VHF radio, SATCOM narrowband, digital broadband, and IEEE 802.11 wireless protocol, as well as combinations thereof.

SIU 46 in one configuration is coupled 48 to a remotely controllable electronic switch 50 that is controlled via an Ethernet connection 56 or ARINC 429 interface, depending upon the location of a data load application.

The switch is controlled in one configuration using directed commands from an "authenticated" ground station (i.e., a trusted ground-based data communication apparatus 12) or another valid network client via a terminal area wireless local area network (LAN) operating according to a compatible standard. In one configuration, IEEE 802.11 is utilized for the compatible standard. In another configuration in which an Ethernet link is used, a protocol is used between SIU 46 and NSU 41 that permits a remote station 12 of a network client to establish a direct connection to an avionics LRU such as one of avionics units 24 for loading or downloading an ARINC 615 data. The request for this upload may be initiated using a data communication apparatus 12 such as a pilot access terminal (PAT), electronic flight bag (EFB), or a ground network client. Safety checks, such as those used for data loading by traditional 2-way ARINC communication, are used by avionics LRUs 24. These checks include embedded (or load) cyclic redundancy checks (CRCs) that are independently recalculated by a target avionics LRU 24 upon receipt, use of ARINC assigned system address labels (SAL), hardware/software compatibility checks in the LRUs, and other checks.

Some existing aircraft, such as the Boeing 747-400, have a permanently installed airborne data loader that is always powered up. In existing aircraft, relays and switches have been installed to isolate multiple transmitters to avoid connecting two transmitters to a single receiver at the same time.

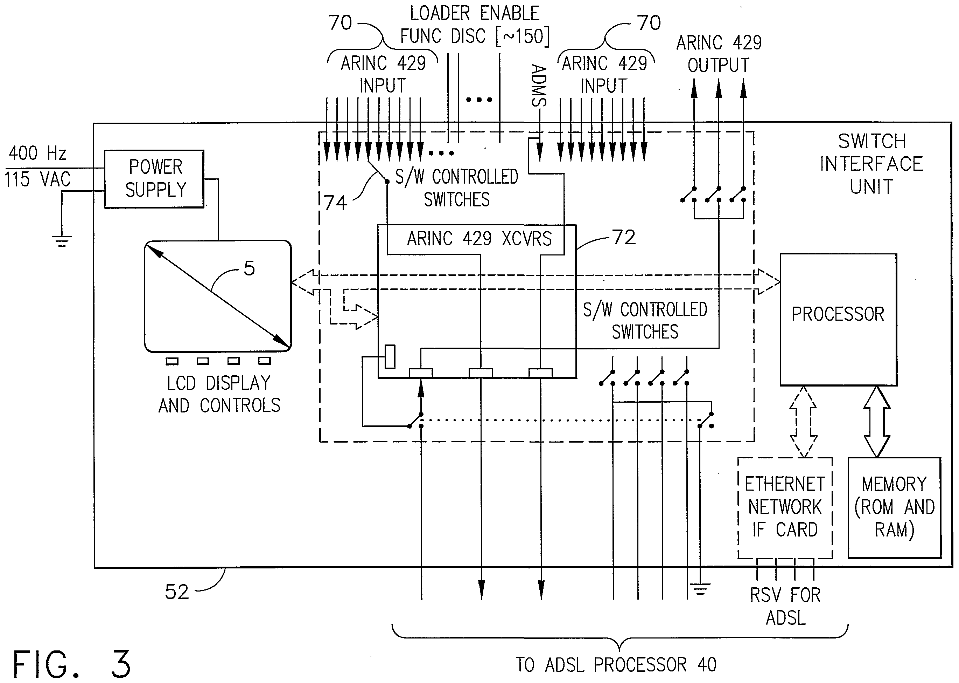

Therefore, in one configuration, a switch such as that described in U. S. Provisional Application No. 60/268,085, filed February 13, 2001, is used as switch 52. Referring to Figures 2 and 3, two or more ARINC 429 inputs 70 are directly connected to a single receiver or transceiver 72 at one time by implementing a software controlled switch 74 at remotely controlled hub or switch 52. This implementation eliminates the need for external relays, procedural workarounds and major aircraft production revisions. ARINC 429 transceiver 72 in the embodiment of switch 52 represented in Figure 3 actually includes two receivers as well as a transmitter, with one of the two receivers hard-wired to a single, unswitched ARINC 429 input.

In one configuration of the present disclosure, aircraft data services link (ADSL) 26 performs a remotely controllable data download function utilizing the data loading capabilities of existing aircraft avionics LRUs, 24 including on-board servers. The download of data conforming to the ARINC 615 standard is remotely and/or automatically initiated. The transfer of download data from a network operations center (NOC) via a data communications apparatus 12 or aircraft server to an aircraft avionics unit 24 is similar to downloading of operational software using an ARINC 615 data loader, except that, rather than originating at an ARINC 615 data loader connected by cables to the aircraft, data is downloaded from an on-board server, from one or more network operations centers (NOCs) via a data communications apparatus 12 and/or from a data content service provider. Several different methods are provided in one configuration to initiate uploads. These methods include :
(1) Automatic synchronization downloading and associated auto-delete task for aircraft network clients, such as wireless handheld devices, fixed or quick disconnect flight deck mounted displays, WAP or PDA devices on a flightline, the on-board server, and avionics LRUs. When initiated by a NOC, the onboard server synchronizes with the NOC. Aircraft network clients synchronize with the on-board server.
(2) Automatic configuration management uploads, i.e., aircraft version change management, for loadable entities on the aircraft that are connected to the aircraft network. When software updates are complete, the revised software configuration information is transmitted back automatically to the enabling NOC to alert a quality assurance representative that the download has successfully completed.
(3) Responses to operator-initiated requests from authenticated clients via any of the communication paths connected to ADSL 12. Examples of such requests include access to the data from avionics LRUs without manual operator intervention on the aircraft, synchronization tasks with associated ground network systems, backup and recovery initiation, and other network requests. Network clients include, for example, one or more authorized users communicating using any of ADSL 12 communication links, cabin or flight deck mounted terminals, portable digital assistants (PDAs), wireless electronic flight bags (EFB), or one or more ground terminals.

A spread spectrum link 14 is used in one configuration of the present disclosure to manually initiate an ARINC 615 download. An ARINC 615 CONFIG. LDR file intended for a target LRU is configured for a download. This header file includes an appropriate system address label (SAL) for the target LRU, in addition to load CRCs, etc. A connection to a specific computer occurs prior to activating a data download when multiple computers having the same SAL are installed. A download task/configuration manager informs the operator that a connection to the target LRU has been established. In one configuration, this notification is performed in conjunction with a data loader application resident on a ground-based system, an authorized network client, or the avionics gateway. A communications protocol is utilized between the avionics gateway and an on-board server to tag the most recent configuration changes for transmission back to the NOC.

ARINC 615-3 and ARINC 615A data loader data for software, configuration, or database updates are transferred, in one configuration of the present disclosure, by initiating software downloads from the ground to any software loadable aircraft avionics unit (i.e., LRU) 24, for example, operational program software (OPS), operational program configuration (OPC), and databases for ARINC 615 LRUs. Systems such as flight management computers (FMCs), flight control computers (FCCs), digital flight data acquisition units (DFDAUs) 22, aircraft conditioning monitor systems (ACMSs) 22, SATCOMs, onboard servers and all other ARINC 615-3 or ARINC 615A Ethernet loadable systems can be loaded from the ground using appropriate ARINC 615-3 or ARINC 615A download commands. An aircraft data services link ADSL, 26 system is resident on the aircraft to direct software download requests to any loadable system and to transmit data via existing ARINC 429 and Ethernet interfaces to software loadable systems. The ADSL includes one or more processors 40, a memory 42, a remotely controllable SIU 46, and a hub or switch 52 coupled to a transceiver 32 (such as an IEEE 802.11 transceiver) for transmission of data to an aircraft. An existing ARINC 429 data loader interface, centralized and accessible in the aircraft's flight deck compartment, in conjunction with the ADSL 26, allows direct control and transfer of software updates to aircraft subsystems within range of a ground station access point having a wireless data communication apparatus 12.

Configurations of the present disclosure are thus capable of providing routing and configuration management for each loadable system and terminal device connected to an aircraft local area network (LAN), both on and off an aircraft.

One suitable SIU 46 and switch 52, in one configuration, provides automated electronic switching and control for data downloading of software in the form of operational programs, operational configuration of databases, collection of software configuration information from systems such as avionics subsystems and loading data between those subsystems and ARINC 615-3 or 615A data load applications. The data load applications may be resident in existing ARINC 615 airborne, portable, or PC-based data loaders or an optional ARINC 763 type on-aircraft network server system. In one configuration, SIU 46 and switch 52 use a real-time LINUX based platform that is also capable of hosting any data load application. The switch interface unit can be manually controlled and used as a stand-alone replacement for existing rotary switches, or remotely controlled and integrated into an ARINC 763 type network server system.

In one configuration, SIU 46 and switch 52 are configured as a single physical unit as a stand alone, data loader rotary switch replacement.

Combination SIU 46 and switch 52 in this configuration comprise a programmable electronic switch that displays and allows selection of loadable systems on an aircraft for the purpose of initiating a software data load. The input and output of the combination unit is programmable, primarily to activate interfaces with loadable LRUs connected to the combination unit, which may vary between different airplane models and airlines. In addition, in one configuration, the combination unit provides the functions of a configuration data tool and repository, by containing a collection of loadable LRUs software part numbers and by providing a data display device. The combination unit also functions as a monitor of incoming and outgoing ARINC 429 traffic, with appropriate connections initiated between communicating end-user systems and a data loader application. The data loader application may, for example, be resident in an existing ARINC 615-3 airborne loader, an ARINC 615A Ethernet loader, a portable data loader (when such is connected to a flight deck connector) or the switch interface unit itself, which is capable of hosting the data loader application in its real-time LINUXe operating system. (LINUX is a registered trademark of Linus Torvalds.) In one configuration, ARINC 615-3 data load applications are in the combination unit, because the connection with the airborne server is Ethernet only, while current airplane communication interfaces to the disclosure are ARINC 429. A protocol packing and unpacking scheme is not required if ARINC 615-3 is resident in one configuration of the combination unit.

In a second configuration, the combination unit is utilized in a Network Server System (NSS) that includes an airborne server. In this configuration, the combination unit can be remotely controlled through a provisional Ethernet connection that is activated only by directed commands from the airborne server and/or by directed commands from a ground station via IEEE 802.11 spread spectrum wireless connection. The combination unit may be queried for stored LRU configuration information, for example, software (S/W) part numbers from any or all of the avionics system connected to the combination unit. The combination unit may also, automatically or on request, perform compatibility checks between expected S/W part numbers stored in a resident database or external server connected to the combination unit, and actual part numbers collected by the combination unit.

The combination unit bridges a gap between interfacing with existing avionics systems for data loading and data acquisition without drastically modifying the manner in which airplanes are currently built. The functionality of the combination unit is easily adaptable so that it can become an integral component on future on-board network systems. Embodiments of the combination unit provide can be used efficiently as a directed data query and download engine to an ARINC 763-type network server system. At least one embodiment allows communication with a plurality of computers, which may include a Digital Flight Data Acquisition Unit (DFDAU) and a Flight Management Computer (FMC), without manual intervention via a selection of a rotary switch.

In one configuration of the present disclosure, upon touchdown of an aircraft, an active query of pre-processed Aircraft Conditioning Monitoring System (ACMS), Smart Access Recorder (SAR), Quick Access Recorder (QAR), and Data Acquisition Recorder (DAR) historical data from a concluded flight obtained from avionics units 24 can be initiated using remotely selectable ARINC 429 data loader interfaces connected to a remotely controlled switch 52. No accumulated data is lost. Active queries are prevented in this configuration due to avionics systems interlocks in the air.

The combination unit functions as the aircraft system selector in a data load/configuration system. The combination unit is line replaceable, and has many advantages over existing rotary switches. The design of the combination unit meets and exceeds current data load interfacing requirements for avionics equipment.

Existing functionality includes acquisition of ARINC 615 data of flight operations quality assurance (FOQA) smart access recorder (SAR), quality assurance report (QAR) data and reports for aircraft communications and reporting system (ACARS) stored in ACMS 20. Functionality added in one configuration of the present disclosure includes uploading of stored fault information from any aircraft LRU 24 connected to ADSL 26. Common system requirements are imposed to achieve this added functionality. For example, fault message formats are specified for data upload of all connected systems for which ARINC 615 upload capability is added or newly utilized. The additional data acquisition feature, combined with storage and transmission of ARINC 615 data and the use of minor software updates to aircraft systems, allows a complete central maintenance function on non CMC-equipped airplanes such as
Boeing 737s, 757s, and 767s, without associated production wiring changes.

In one configuration, ADSL 26 retrieves a smart access recorder (SAR) data stream of up to eight channels and triggered ACMS 20 reports in addition to a QAR data stream in ARINC 615 data format. Upload retrieval time is about 164 seconds for a 2 MB file acquired from digital flight data acquisition unit DFDAU 22 ARINC 573/717 serial bus output. A 2 MB file represents one flight's worth of flight operations quality assurance (FOQA) data, nominally defined as 2 hours for a flight. The uplink retrieval time is 164 seconds as a result of the data retrieval method used prior to 802.11 b transfer. More specifically, the downlink retrieval time includes 160 seconds on ground plus 4 seconds for aircraft ground data transfer. A 40 MB file represents a transfer at the end of a day's worth of flights. The uplink retrieval time for this 40 MB file is 160 seconds, because 18 MB has already been acquired by the server application for previous flight legs.

A 200 MB file represents a transfer at the end of two weeks of flights. (200 MB represents a capacity of PCMCIA cards used for FOQA storage devices such as
QARs and ACMS.) The uplink retrieval time for this 200 MB file is 400 seconds, because 198 MB is acquired by the server application for previous flight legs.

It will thus be seen that configurations of the present disclosure reduce or eliminate the need for manual intervention to operate switches to provide connectivity between avionics units, and thus provide the capability to automatically upload avionics data from aircraft to ground stations via wireless communication links without requiring extensive rewiring and/or redesign of existing aircraft. The capability for remotely-initiated download of data from ground stations to aircraft is also provided without extensive rewiring and/or design.

The description of the configurations is merely exemplary in nature and, thus, variations that do not depart from the gist of the configurations are intended to be within the scope of the appended claims.

## Claims

1. An apparatus for downloading data to a selected one of a plurality of avionics line replaceable units, "LRUs", (24) onboard an aircraft, said apparatus comprising an aircraft data services link, "ADSL" (26), including:
a wireless radio transceiver (32), wherein data intended to be downloaded to an LRU is received wirelessly;
a network server unit (41) responsive to said wireless radio transceiver (32), wherein said network server unit (41) is configured to identify an LRU (24) to which a download is to be made using information contained in the data; and
a remotely controllable switch (52) responsive to said network server unit (41) to configure a data path between said wireless radio transceiver (32) and a selected one of said LRUs (24) for downloading of data, wherein:
said data is wirelessly downloaded to the identified LRU via the transceiver (32) receiving the original data identifying the LRU using the selectively switched communication path, the ADSL (26) being configured to perform a data download function that utilizes data loading capabilities of the aircraft LRUs (24),
the network server unit (41) comprises at least one processor (40) and a memory (42), wherein the memory includes instructions to operate the processor (40), wherein the instructions comprise instructions to maintain a database containing version identifiers of software stored in software-loadable LRUs, and
the processor (40) is configured to update the database to reflect the updated software version in the identified LRU to which the data is downloaded.

2. An apparatus in accordance with Claim 1 wherein said apparatus further comprises a system interface unit (46), wherein
said system interface unit is responsive to said network server unit (41), wherein said remotely controllable switch (52) is responsive to said system interface unit (46) to configure a data path between said wireless radio transceiver (32) and a selected one of said LRUs (24) for downloading of data, wherein
said data is wirelessly downloaded to the identified LRU via the transceiver (32) receiving the original data identifying the LRU using the selectively switched communication path.

3. An apparatus in accordance with Claim 2 wherein said system interface unit (46) and remotely controllable switch (52) are configured as a single physical unit as a stand alone, data loader rotary switch replacement.

4. An apparatus in accordance with Claim 1, 2 or 3 wherein said apparatus further comprises a wireless spread spectrum transceiver configured to receive said message wirelessly.

5. An apparatus in accordance with any one of Claims 1 to 4 further configured to receive an operational program configuration (OPC) file that contains criteria for automated routing.

6. An apparatus in accordance with any of Claims 1 to 5 further configured to trigger said wireless download of data upon a triggering condition.

7. An apparatus in accordance with Claim 6 configured to trigger said wireless download of data upon setting of parking brake.

8. An apparatus in accordance with Claim 6 or 7 further configured to accumulate records of wireless downloads.

9. An apparatus in accordance with any of Claims 1-8 configured to wirelessly download operational software.

10. A method for remotely downloading data to a selected one of a plurality of avionics line replaceable units (LRUs) on an aircraft, said method comprising:
transmitting data wirelessly to a transceiver (32) on the aircraft;
identifying, by a network server unit (41), an LRU to which the data is to be downloaded using information contained in the data;
selectively switching a communication path from said transceiver to the identified LRU dependent upon the identified LRU; and
wirelessly downloading said data to the identified LRU utilizing the selectively switched communication path,
wherein the network server unit (41) comprises at least one processor (40) and a memory (42), wherein the memory includes instructions to operate the processor (40), wherein the instructions comprise instructions to maintain a database containing version identifiers of software stored in software-loadable LRUs,
the processor (40) updating the database to reflect the updated software version in the identified LRU to which the data is downloaded.

11. A method in accordance with Claim 10 wherein the selectively switched communication path is an ARINC 429 communication path.

12. A method in accordance with Claim 10 wherein said selectively switching a communication path comprises selectively switching one of a plurality of ARINC 429 communication paths utilizing a software-controlled switch.

13. A method in accordance with Claim 10 wherein said transmitting a message wirelessly comprises transmitting the message wirelessly utilizing a wireless spread spectrum communication link.

14. A method in accordance with Claim 10 wherein said transmitting a message wirelessly further comprises transmitting an operational program configuration (OPC) file that contains criteria for automated routing.

15. A method in accordance with Claim 10 further comprising triggering said wirelessly downloading data upon a triggering condition.

16. A method in accordance with Claim 10 wherein said triggering condition is setting of a parking brake.

17. A method in accordance with Claim 10 further comprising accumulating records of wireless downloads.

18. A method in accordance with Claim 10 further comprising configuring a header file for the identified LRU to download.

19. A method in accordance with Claim 10 wherein said data wirelessly downloaded comprises operational software.

## Patentansprüche

1. Vorrichtung zum Herunterladen von Daten auf eine ausgewählte aus einer Vielzahl von Line-Replaceable-Units (LRUs) (24) an Bord eines Flugzeugs, wobei die Vorrichtung eine Flugzeugdatendienstverbindung (ADSL, Aircraft Data Services Link) (26) umfasst, die Folgendes umfasst:
einen drahtlosen Funk-Transceiver (32), wobei Daten, die auf eine LRU heruntergeladen werden sollen, drahtlos empfangen werden;
eine Netzwerkservereinheit (41), die auf den drahtlosen Funk-Transceiver (32) reagiert, wobei die Netzwerkservereinheit (41) dazu ausgelegt ist, eine LRU (24), auf die ein Herunterladen durchgeführt werden soll, unter Verwendung von in den Daten enthaltenen Informationen zu identifizieren; und
einen fernsteuerbaren Schalter (52), der auf die Netzwerkservereinheit (41) reagiert, um einen Datenpfad zwischen dem drahtlosen Funk-Transceiver (32) und einer ausgewählten der LRUs (24) zum Herunterladen von Daten zu konfigurieren, wobei:
die Daten über den Transceiver (32), der die Originaldaten empfängt, welche die LRU identifizieren, drahtlos unter Verwendung des selektiv geschalteten Kommunikationspfads auf die identifizierte LRU heruntergeladen werden, wobei die ADSL (26) dazu ausgelegt ist, eine Funktion zum Herunterladen der Daten durchzuführen, welche die Datenladefähigkeiten der Flugzeug-LRUs (24) nutzt,
die Netzwerkservereinheit (41) mindestens einen Prozessor (40) und einen Speicher (42) umfasst, wobei der Speicher Anweisungen zum Betreiben des Prozessors (40) enthält, wobei die Anweisungen Anweisungen zum Verwalten einer Datenbank umfassen, die Versionskennungen von in Software-ladbaren LRUs gespeicherter Software enthält, und
der Prozessor (40) dazu ausgelegt ist, die Datenbank zu aktualisieren, um die aktualisierte Softwareversion in der identifizierten LRU, auf die die Daten heruntergeladen werden, widerzuspiegeln.

2. Vorrichtung nach Anspruch 1, wobei die Vorrichtung weiterhin eine Systemschnittstelleneinheit (46) aufweist, wobei:
die Systemschnittstelleneinheit auf die Netzwerkservereinheit (41) reagiert, wobei der fernsteuerbare Schalter (52) auf die Systemschnittstelleneinheit (46) reagiert, um einen Datenpfad zwischen dem drahtlosen Funk-Transceiver (32) und einer ausgewählten der LRUs (24) zum Herunterladen von Daten zu konfigurieren, wobei
die Daten über den Transceiver (32), der die Originaldaten empfängt, welche die LRU identifizieren, drahtlos unter Verwendung des selektiv geschalteten Kommunikationspfads auf die identifizierte LRU heruntergeladen werden.

3. Vorrichtung nach Anspruch 2, wobei die Systemschnittstelleneinheit (46) und der fernsteuerbare Schalter (52) als einzelne physikalische Einheit als eigenständiger Ersatz für den Drehschalter eines Datenladers konfiguriert sind.

4. Vorrichtung nach Anspruch 1, 2 oder 3, wobei die Vorrichtung weiterhin einen drahtlosen Spreizspektrum-Transceiver umfasst, der zum drahtlosen Empfangen der Nachricht konfiguriert ist.

5. Vorrichtung nach einem der Ansprüche 1 bis 4, die weiterhin dazu ausgelegt ist, eine OPC-Datei (Operational Program Configuration), die Kriterien für ein automatisiertes Routing enthält, zu empfangen.

6. Vorrichtung nach einem der Ansprüche 1 bis 5, die weiterhin dazu ausgelegt ist, bei einer Auslösebedingung das drahtlose Herunterladen von Daten auszulösen.

7. Vorrichtung nach Anspruch 6, die weiterhin dazu ausgelegt ist, beim Einstellen der Parkbremse das drahtlose Herunterladen von Daten auszulösen.

8. Vorrichtung nach Anspruch 6 oder 7, die weiterhin dazu ausgelegt ist, Bestätigungen des drahtlosen Herunterladens zu sammeln.

9. Vorrichtung nach einem der Ansprüche 1 bis 8, die dazu ausgelegt ist, Betriebssoftware drahtlos herunterzuladen.

10. Verfahren zum ferngesteuerten Herunterladen von Daten auf eine ausgewählte aus einer Vielzahl von Line-Replaceable-Units (LRUs) an Bord eines Flugzeugs, wobei das Verfahren Folgendes umfasst:
drahtloses Übertragen von Daten an einen Transceiver (32) in dem Flugzeug;
mittels einer Netzwerkservereinheit (41) Identifizieren einer LRU, in die die Daten heruntergeladen werden sollen, unter Verwendung von in den Daten enthaltenen Informationen;
selektives Schalten eines Kommunikationspfades von dem Transceiver zu der identifizierten LRU in Abhängigkeit von der identifizierten LRU; und
drahtloses Herunterladen der Daten auf die identifizierte LRU unter Verwendung des selektiv geschalteten Kommunikationspfads,
wobei die Netzwerkservereinheit (41) mindestens einen Prozessor (40) und einen Speicher (42) umfasst, wobei der Speicher Anweisungen zum Betreiben des Prozessors (40) enthält, wobei die Anweisungen Anweisungen zum Verwalten einer Datenbank umfassen, die Versionskennungen von in Software-ladbaren LRUs gespeicherter Software enthält,
mittels des Prozessors (40) Aktualisieren der Datenbank, um die aktualisierte Softwareversion in der identifizierten LRU, in die die Daten heruntergeladen werden, widerzuspiegeln.

11. Verfahren nach Anspruch 10, wobei es sich bei dem selektiv geschalteten Kommunikationspfad um einen ARINC-429-Kommunikationspfad handelt.

12. Verfahren nach Anspruch 10, wobei das selektive Schalten eines Kommunikationspfads das selektive Schalten eines aus einer Vielzahl von ARINC-429-Kommunikationspfaden unter Verwendung eines softwaregesteuerten Schalters umfasst.

13. Verfahren nach Anspruch 10, wobei das drahtlose Senden einer Nachricht das drahtlose Senden der Nachricht unter Verwendung einer drahtlosen Spreizspektrum-Kommunikationsverbindung umfasst.

14. Verfahren nach Anspruch 10, wobei das drahtlose Senden einer Nachricht weiterhin das Senden einer OPC-Datei (Operational Program Configuration) umfasst, die Kriterien für ein automatisiertes Routing enthält.

15. Verfahren nach Anspruch 10, das weiterhin das Auslösen eines drahtlosen Herunterladenn von Daten bei einer Auslösebedingung umfasst.

16. Verfahren nach Anspruch 10, wobei es sich bei der Auslösebedingung um das Einstellen einer Parkbremse handelt.

17. Verfahren nach Anspruch 10, das weiterhin das Sammeln von Bestätigungen des drahtlosen Herunterladens umfasst.

18. Verfahren nach Anspruch 10, das weiterhin das Konfigurieren einer Header-Datei, die von der identifizierten LRU heruntergeladen werden soll, umfasst.

19. Verfahren nach Anspruch 10, wobei die drahtlos heruntergeladenen Daten Betriebssoftware umfassen.

## Revendications

1. Dispositif de téléchargement descendant de données auprès d'un certain LRU parmi une pluralité d'éléments d'avionique remplaçables en escale (LRU, line replaceable unit) (24) situés à bord d'un aéronef, ledit dispositif comprenant un lien d'accès aux données d'aéronef (ADSL, aircraft data services link) (26), comprenant:
un émetteur-récepteur radio sans fil (32), les données destinées à être téléchargées auprès d'un LRU étant reçues sans fil;
une unité de serveur en réseau (41) réagissant audit émetteur-récepteur radio sans fil (32), ladite unité de serveur en réseau (41) étant conçue pour identifier un LRU (24), auprès duquel le téléchargement doit être réalisé, au moyen des informations contenues dans les données; et
un commutateur télécommandable (52) et réagissant à ladite unité de serveur en réseau (41) pour configurer un chemin de données entre ledit émetteur-récepteur radio sans fil (32) et un certain LRU parmi lesdits LRU (24) pour le téléchargement descendant de données;
lesdites données étant téléchargées sans fil auprès du LRU identifié par le biais de l'émetteur-récepteur (32) recevant les données originales identifiant le LRU, au moyen de la voie de communication sélectivement commutée, l'ADSL (26) étant conçu pour réaliser une fonction de téléchargement de données exploitant les capacités de chargement de données des LRU (24) de l'aéronef,
l'unité de serveur en réseau (41) comprenant au moins un processeur (40) et une mémoire (42), ladite mémoire renfermant des instructions d'exploitation du processeur (40), lesdites instructions comprenant des instructions visant à la maintenance d'une base de données contenant des identifiants de la version du logiciel stocké dans des LRU à logiciel chargeable, et
le processeur (40) étant conçu pour actualiser la base de données pour rendre compte de la version actualisée du logiciel du LRU identifié auprès duquel les données sont téléchargées.

2. Dispositif selon la revendication 1, dans lequel ledit dispositif comprend en outre une unité d'interface système (46);
ladite unité d'interface système réagissant à ladite unité de serveur en réseau (41), ledit commutateur télécommandable (52) réagissant à ladite unité d'interface système (46) pour configurer un chemin de données entre ledit émetteur-récepteur radio sans fil (32) et un certain LRU parmi lesdits LRU (24) pour le téléchargement descendant de données,
lesdites données étant téléchargées sans fil auprès du LRU identifié par le biais de l'émetteur-récepteur (32) recevant les données originales identifiant le LRU, au moyen de la voie de communication sélectivement commutée.

3. Dispositif selon la revendication 2, dans lequel ladite unité d'interface système (46) et ledit commutateur télécommandable (52) sont conçus sous la forme d'une même unité physique constituant un replacement indépendant de commutateur rotatif de chargeur de données.

4. Dispositif selon la revendication 1, 2 ou 3, dans lequel ledit dispositif comprend en outre un émetteur-récepteur sans fil à spectre étalé conçu pour recevoir ledit message sans fil.

5. Dispositif selon l'une quelconque des revendications 1 à 4, conçu en outre pour recevoir un fichier OPC (operational program configuration) contenant des critères pour un routage automatisé.

6. Dispositif selon l'une quelconque des revendications 1 à 5, conçu en outre pour déclencher ledit téléchargement sans fil de données en cas de condition de déclenchement.

7. Dispositif selon la revendication 6, conçu pour déclencher ledit téléchargement sans fil de données en cas d'actionnement du frein de stationnement.

8. Dispositif selon la revendication 6 ou 7, conçu en outre pour accumuler des attestations de téléchargements sans fil.

9. Dispositif selon l'une quelconque des revendications 1 à 8, conçu pour télécharger sans fil des logiciels opérationnels.

10. Procédé de téléchargement descendant de données à distance auprès d'un certain LRU parmi une pluralité d'éléments d'avionique remplaçables en escale (LRU, line replaceable unit) présents sur un aéronef, ledit procédé comprenant:
la transmission sans fil de données auprès d'un émetteur-récepteur (32) présent sur l'aéronef,
l'identification, par une unité de serveur en réseau (41), d'un LRU auprès duquel les données doivent être téléchargées, au moyen des informations contenues dans les données,
la commutation sélective d'une voie de communication, dudit émetteur-récepteur vers le LRU identifié, en fonction du LRU identifié, et
le téléchargement descendant sans fil desdites données auprès du LRU identifié, en exploitant la voie de communication sélectivement commutée;
ladite unité de serveur en réseau (41) comprenant au moins un processeur (40) et une mémoire (42), ladite mémoire renfermant des instructions d'exploitation du processeur (40),
lesdites instructions comprenant des instructions visant à la maintenance d'une base de données contenant des identifiants de la version du logiciel stocké dans des LRU à logiciel chargeable, et
le processeur (40) actualisant la base de données pour rendre compte de la version actualisée du logiciel du LRU identifié auprès duquel les données sont téléchargées.

11. Procédé selon la revendication 10, dans lequel la voie de communication sélectivement commutée est une voie de communication ARINC 429.

12. Procédé selon la revendication 10, dans lequel ladite commutation sélective de la voie de communication comprend une commutation sélective d'une voie de communication parmi une pluralité de voies de communication ARINC 429 en exploitant un commutateur commandé par un logiciel.

13. Procédé selon la revendication 10, dans lequel ladite transmission d'un message sans fil comprend la transmission du message sans fil au moyen d'un lien de communication sans fil à spectre étalé.

14. Procédé selon la revendication 10, dans lequel ladite transmission d'un message sans fil comprend en outre la transmission d'un fichier OPC (operational program configuration) contenant des critères pour un routage automatisé.

15. Procédé selon la revendication 10, comprenant en outre le déclenchement dudit téléchargement descendant de données sans fil en cas de condition de déclenchement.

16. Procédé selon la revendication 10, dans lequel ladite condition de déclenchement est l'actionnement du frein de stationnement.

17. Procédé selon la revendication 10, comprenant en outre l'accumulation d'attestations de téléchargements sans fil.

18. Procédé selon la revendication 10, comprenant en outre la configuration d'un fichier d'en-tête destiné à être téléchargé par le LRU identifié.

19. Procédé selon la revendication 10, dans lequel lesdites données téléchargées sans fil comprennent des logiciels opérationnels.
